# FASCICULE DE BREVET EUROPEEN

(11) **EP 2 009 252 B1**
(45) Date de publication et mention de la délivrance du brevet: **31.08.2011**
(21) Numéro de dépôt: 08158908.7
(22) Date de dépôt: 24.06.2008
(51) Int. Cl.: F01D 25/16, F16D 1/06

(54) **Montage d'un arbre dans un palier avec un écrou auto extracteur**
Montage einer Welle in einem Wellenlager mit selbstabziehender Mutter
Installation of a shaft in a bearing with a self-extracting nut

(30) Priorité: 25.06.2007 FR 0704544
(43) Date de publication de la demande: 31.12.2008
(73) Titulaire: SNECMA, 75015 Paris (FR)
(72) Inventeur: SERVANT, Régis, Eugène, Henri, 91270, Vigneux sur Seine (FR)
(74) Mandataire: David, Daniel

(56) Documents cités:
- EP-A- 0 987 457
- EP-A- 1 498 624
- GB-A- 802 263

## Description

La présente invention se rapporte à un moteur à turbine à gaz dans le domaine aéronautique, et vise le montage d'un arbre à l'intérieur du moteur plus particulièrement de l'extrémité amont de l'arbre du compresseur à haute pression dans un moteur à double corps.

Les opérations de montage et de démontage des turbomoteurs sont délicates en raison du nombre de pièces qui les composent et des faibles jeux entre elles alors que les dimensions peuvent être importantes. Le coût des interventions sur les moteurs de ce type est de ce fait toujours élevé. On cherche donc en permanence à les simplifier. Dans un moteur à turbosoufflante avant et à double corps, comme le cfm56, l'accès au palier support de l'arbre du compresseur à haute pression est particulièrement difficile car il est monté au niveau du carter intermédiaire en arrière de la soufflante et des deux premiers paliers supportant respectivement l'arbre du compresseur basse pression et celui de la soufflante.

On rappelle que l'on désigne par les termes : carter intermédiaire, l'élément du stator structural en arrière du carter de soufflante par lequel transitent une partie des efforts entre le moteur et l'aéronef et qui supporte les paliers avant des rotors. Le carter intermédiaire comprend un moyeu agencé pour supporter des paliers dont le palier avant de l'arbre du rotor à haute pression. Le moyeu est relié à une virole extérieure par des bras radiaux qui traversent les flux primaire et secondaire. Le palier du compresseur HP supporte en rotation l'extrémité avant de l'arbre du compresseur HP. En avant de cet arbre, dans son prolongement axial, est monté un pignon conique qui engrène avec un pignon conique solidaire d'un arbre radial. Ces pignons forment ensemble l'IGB (Intermediate GearBox). L'arbre radial entraîne à son extrémité radialement extérieure, sur le carter de la soufflante, les engrenages de la boîte, désignée AGB (Accessories GearBox), d'entraînement mécanique des équipements auxiliaires du moteur : pompes, générateurs de courant électrique ou autres.

Afin d'éviter le démontage de toute la partie avant du moteur et de la soufflante en particulier, les éléments du palier sont agencés de manière à permettre le montage par l'arrière. Une telle solution est avantageuse mais nécessite des précautions.

Une solution connue sur un moteur à double flux et à double corps fait appel à un système complexe, comportant de nombreuses pièces, qui est difficile à fabriquer et à installer. Cette solution requiert de plus une grande longueur pour son installation incompatible avec des moteurs de petites dimensions.

En outre cette solution connue n'est pas compatible avec un système de lubrification par écope centrifuge.

Le problème à résoudre concerne donc un type de liaison entre l'arbre du compresseur HP, l'IGB et le palier permettant le montage et le démontage de compresseur HP avec accès unique des outillages par l'arrière du moteur.

L'invention a également pour objectif une liaison compacte qui s'insère dans l'espace disponible sans qu'il soit nécessaire de modifier les pièces environnantes ni de diminuer le jeu avec l'arbre de turbine à basse pression. Un tel jeu est nécessaire en cas de découplage des paliers de la soufflante lors d'une perte d'aube par exemple, et pour la ventilation du moteur.

Plus généralement l'invention concerne un moteur à turbine à gaz comprenant un arbre, un palier, un manchon supporté par le palier, l'arbre étant engagé par un tourillon d'extrémité à l'intérieur du manchon et fixé au manchon au moyen d'un écrou cylindrique.

Un tel moteur comportant ce type de montage est connu de l'art antérieur et est illustré par exemple par le brevet EP 1498624.

Conformément à l'invention on parvient à réaliser les objectifs visés ci dessus avec un moteur ayant les caractéristiques de la revendication 1 et caractérisé par le fait que l'écrou est logé à l'intérieur du tourillon et est en butée axiale dans une première direction contre le manchon, lorsque le tourillon est vissé sur l'écrou, un anneau d'arrêt fendu logé dans une gorge annulaire ménagée sur la face extérieure de l'écrou forme butée axiale contre le manchon dans la direction opposée à la première permettant l'extraction du tourillon du manchon par dévissage de l'écrou.

L'écrou est donc de type auto extracteur et permet de simplifier la séquence de montage démontage du moteur. Les pièces du moteur constituent en effet une partie de l'outillage nécessaire à cette séquence. Le moteur intègre donc en permanence la partie la plus critique de cet outillage ce qui simplifie le reste de l'outillage qui doit être disponible dans chaque atelier de maintenance.

Afin de permettre la mise en place de l'anneau d'arrêt fendu, son épaisseur est inférieure à l'espace radial ménagé entre l'écrou et le manchon.

De préférence la surface de l'anneau d'arrêt fendu du côté de la surface de butée axiale du manchon et la surface de butée axiale du manchon sont tronconiques, de manière à empêcher l'ouverture de l'anneau d'arrêt fendu sous effort axial quand l'anneau est en butée contre la surface de butée axiale du manchon.

Avantageusement l'anneau d'arrêt fendu comprend du côté opposé au précédent un prolongement cylindrique formant détrompeur.

Afin d'assurer un maintien de l'anneau d'arrêt fendu dans la dite gorge le tourillon comprend une portion d'extrémité cylindrique recouvrant l'anneau d'arrêt fendu.

L'invention s'applique de préférence au cas où le manchon est une roue conique de prise de puissance mécanique pour l'entraînement des équipements auxiliaires et plus particulièrement au cas où l'arbre est l'arbre du compresseur à haute pression dans un moteur à double corps.

Cette solution permet le démontage du compresseur à haute pression de façon simple en intervenant uniquement par l'arrière du moteur et ne remet pas en cause les outillages et moyens de montage utilisés couramment.

Le montage démontage par l'arrière du moteur est très avantageux et réduit de façon très importante le coût de cette opération.

L'invention présente un intérêt particulier quand le tourillon de l'arbre du compresseur est fretté à l'intérieur du pignon conique. Par frettage on comprend ici que le tourillon et la roue conique sont suffisamment serrés l'un dans l'autre de sorte que lors du fonctionnement du moteur il n'y ait aucun glissement entre le pignon et le tourillon, ce qui provoquerait une usure prématurée des surfaces en contact (fretting).

L'invention porte donc également sur le procédé de montage et de démontage.

Le procédé de montage de l'arbre du compresseur à haute pression dans ledit palier du moteur, comprend les étapes suivantes:
- montage de l'écrou dans la roue conique,
- insertion de l'anneau d'arrêt dans la gorge de l'écrou,
- bridage axial de l'écrou,
- engagement du tourillon d'extrémité amont de l'arbre de compresseur à haute pression,
- vissage de l'écrou à l'intérieur du tourillon tout en exerçant une poussée axiale sur l'arbre jusqu'à la mise en butée.

Le cas échéant le procédé comprend l'étape de chauffage de la roue conique avant l'engagement de la portion d'extrémité de l'arbre du compresseur.

Le procédé de démontage de l'arbre du compresseur à haute pression dudit palier du moteur, comprenant les étapes suivantes :
- blocage axial du tourillon d'extrémité de l'arbre du compresseur,
- dévissage de l'écrou jusqu'à ce que l'anneau d'arrêt soit en butée contre la roue conique,
- bridage axial de l'écrou,
- dévissage de l'écrou jusqu'au désengagement complet de la portion d'extrémité de l'arbre du compresseur, tout en exerçant une poussée axiale sur l'arbre afin de soulager le filetage.

D'autres avantages et caractéristiques apparaîtront à la lecture de la description qui suit faite plus en détail en référence aux dessins annexés sur lesquels
La figure 1 représente en coupe axiale un moteur à turbine à gaz, de type turbosoufflante à double flux et double corps.
La figure 2 représente en coupe axiale la zone du palier supportant le tourillon d'extrémité de l'arbre du compresseur.
La figure 3 est une vue agrandie de l'écrou placé sur la roue conique, l'anneau d'arrêt fendu étant en cours de montage.
La figure 4 est la même vue que la figure 3 avec le tourillon d'extrémité du compresseur en place.
La figure 5 montre la préparation du montage du tourillon de compresseur dans le palier avec chauffage du palier.
Les figures 6 à 9 montrent quatre étapes de montage du tourillon de compresseur dans le palier.
Les figures 10 à 13 montrent trois étapes de démontage du tourillon de compresseur.

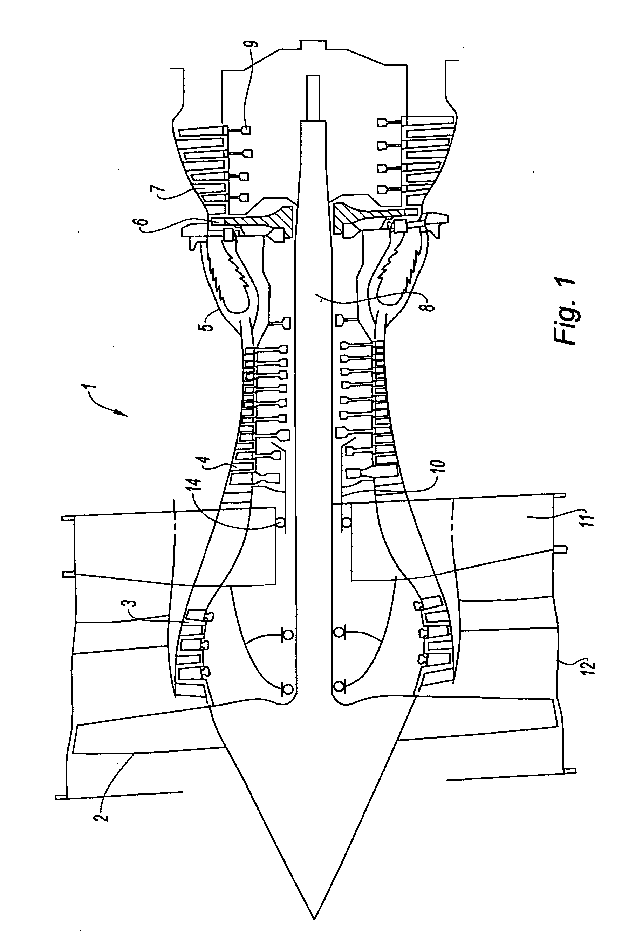

Le moteur représenté sur la figure 1 comprend d'amont en aval par rapport au flux gazeux, les éléments mécaniques suivants : une soufflante avant 2, un compresseur à basse pression 3 un compresseur à haute pression 4, une chambre de combustion 5, un étage 6 de turbine à haute pression recevant les gaz de la chambre de combustion, un module de turbine à basse pression 7. La soufflante 2, le compresseur à basse pression 3 et la turbine à basse pression forment un rotor solidaire d'un arbre 8 disposé sur l'axe du moteur. Le compresseur 4 et la turbine 6 à haute pression forment un second rotor 9 indépendant du premier et monté en étant concentrique à l'arbre 8 du premier rotor. Le moteur est contenu dans un ensemble de carter dont à l'amont le carter intermédiaire 11 disposé en aval du carter de soufflante 12. Le carter intermédiaire 11 supporte les paliers avant des deux rotors, dont en particulier le palier support du tourillon 10 d'extrémité amont du rotor 9 du corps à haute pression. Le fonctionnement du moteur 1 est le suivant. L'air aspiré par la soufflante 2 est partagé en deux flux concentriques : un flux primaire et un flux secondaire. Le flux secondaire est éjecté dans l'atmosphère et fournit la majeure partie de la poussée. Le flux primaire est guidé à travers les compresseurs 3 et 4 puis dans la chambre de combustion 5 où il est mélangé à un carburant. Les gaz à haute énergie issus de la chambre de combustion sont détendus successivement dans les turbines 6 et 7 et les mettent en mouvement. Les turbines entraînent à leur tour leur compresseur associé. Les gaz du flux primaire sont éjectés vers l'aval et participent à la poussée produite par le moteur.

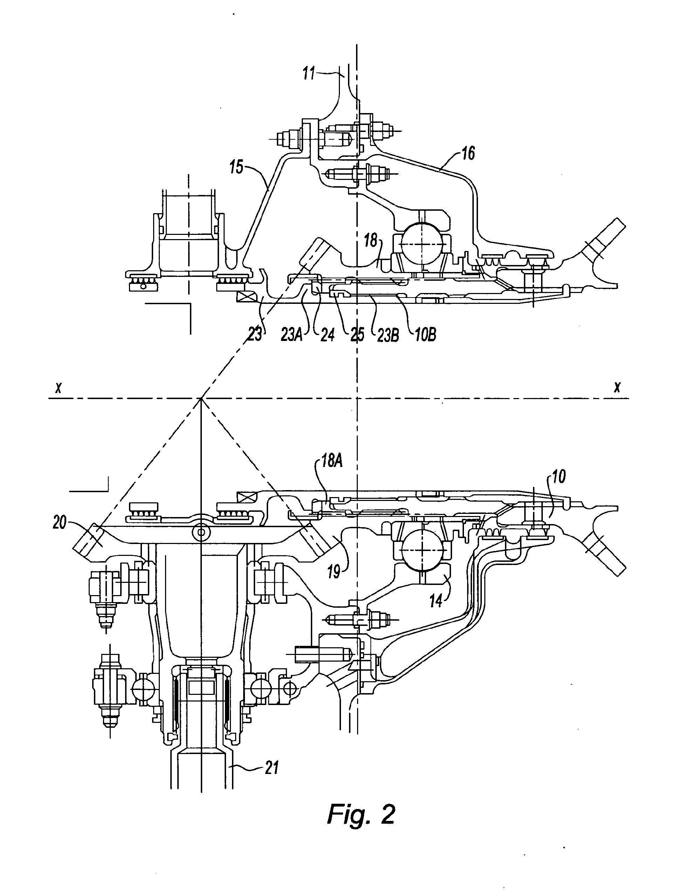

La figure 2 montre plus en détail l'intérieur du moyeu du carter intermédiaire.

Le carter intermédiaire 11 supporte le roulement du palier 14. Ce palier est désigné communément palier trois car il est le troisième à partir de l'amont du moteur. Les paliers un et deux supportant les arbres de soufflante et de compresseur à basse pression.

Le palier 14 à billes est enfermé dans une enceinte ménagée par un flasque d'étanchéité amont 15 et un flasque d'étanchéité aval 16. Le palier 14 supporte un manchon 18 qui est solidaire d'une roue conique 19. La roue conique comprend des dents disposées sur une surface conique et qui coopèrent avec les dents d'un pignon conique 20 disposé sensiblement perpendiculairement à l'axe XX du moteur. Le pignon est solidaire d'un arbre radial 21 dont on ne voit qu'une partie. Cet arbre se prolonge jusqu'au carter de soufflante où il est raccordé à une boite à engrenages AGB pour l'entraînement des équipements auxiliaires du moteur.

Le tourillon 10 d'extrémité de l'arbre du compresseur à haute pression est retenu à l'intérieur du manchon 18 par un écrou 23 cylindrique.

L'écrou de forme générale cylindrique est vissé à l'intérieur du tourillon 10. Il est en butée selon une première direction axiale vers l'aval par une bride radiale extérieure 23A contre une surface 18A transversale du manchon 18. Dans le cas présent une écope 24 centrifuge d'huile est interposée entre les deux surfaces 23A et 10B. L'écrou comporte un filetage 23B sur sa surface extérieure coopérant avec un filetage intérieur 10B du tourillon 10.

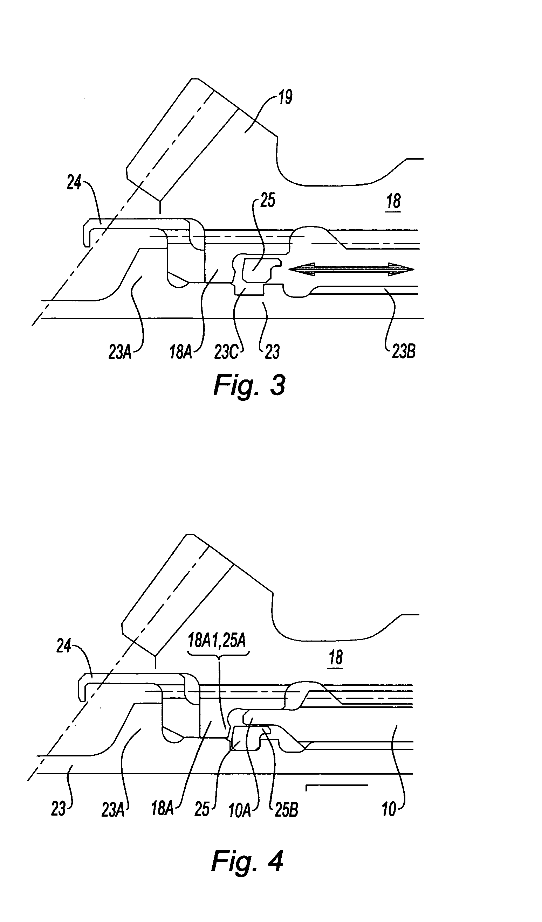

Un anneau d'arrêt fendu 25 en acier est logé dans une gorge annulaire 23C usinée sur la surface extérieure de l'écrou 23. La figure 3 montre la mise en place de l'anneau 25 qui est glissé selon la flèche F dans l'espace annulaire entre l'écrou 23 et le manchon 18 avant le vissage du tourillon 10. L'épaisseur de l'anneau est déterminée de façon à permettre ce passage. La figure 4 montre le tourillon 10 après que l'écrou 23 a été vissé. Le tourillon comprend une portion d'extrémité cylindrique 10A qui recouvre l'anneau 25. Cette disposition assure le blocage de l'anneau pendant le fonctionnement du moteur en le maintenant dans la gorge 23C.

Les faces de la bride radiale interne 18A et de l'anneau 25 qui sont susceptibles de venir en contact, 18A1 et 25A respectivement, sont tronconiques.

L'anneau 25 comprend une collerette de prolongement axial 25B qui a une fonction de détrompage pour le cas où il serait monté à l'envers. En effet le prolongement 25B viendrait en butée contre la portion de surface arrondie au dessus de la portion 18A1 ce qui empêcherait l'introduction de l'anneau dans la gorge 23C. La collerette facilite également la préhension de l'anneau d'arrêt fendu par un outil lors de son démontage.

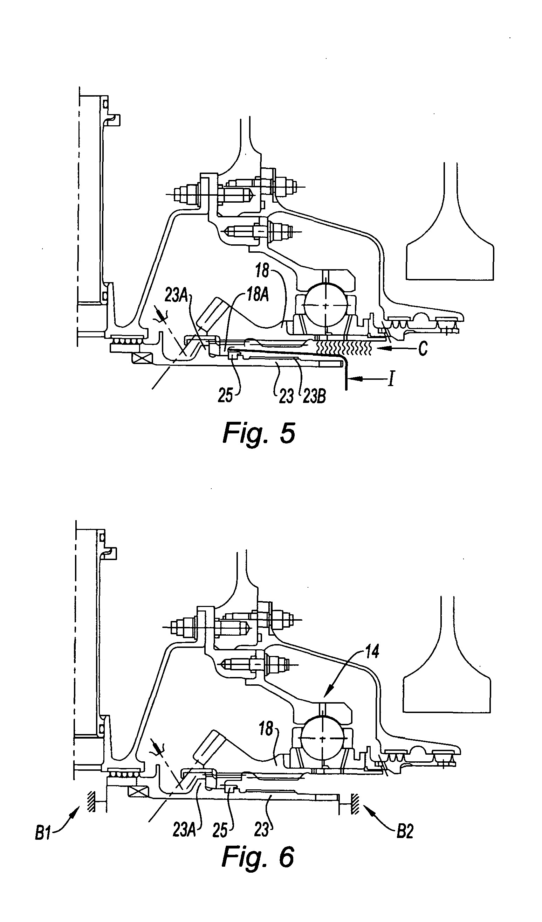

Le montage du tourillon dans le palier est illustré par les figures 5 à 9 qui en illustrent les différentes phases.

Sur la figure 5, l'écrou 23 a été mis en place dans le manchon 18, en butée contre la bride radiale 18A du manchon. L'anneau 25 a été introduit le long de l'espace entre l'écrou et le manchon et glissé dans la gorge 23C. On commence par chauffer en C le manchon et la roue conique dans le palier pour réduire les efforts de frettage ultérieurs. Une protection thermique I recouvre l'écrou pour notamment que son filetage 23B ne soit pas chauffé.

L'étape suivante, figure 6, consiste à brider axialement l'écrou, aussi bien en amont B1 qu'en aval B2, sur une partie fixe de l'outillage, pour que les efforts axiaux de montage ne transitent pas par le roulement palier 3. Ceci pourrait entraîner un poinçonnement des pistes du roulement par les billes, dégradant ainsi la durée de vie de ce palier.

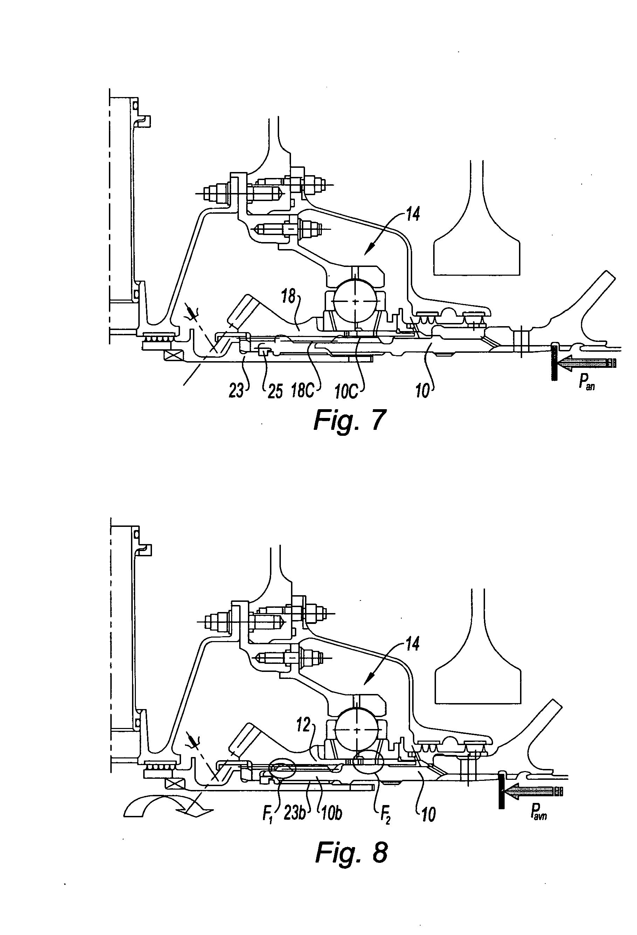

On peut alors, figure 7, engager le tourillon 10 d'extrémité du compresseur à haute pression jusqu'au contact des cannelures, 10C et 18C respectivement. Les cannelures ont été par ailleurs indexées et la roue conique immobilisée par un faux arbre radial. Le tourillon est poussé en direction de l'écrou, avec une poussée additionnelle vers l'amont Pam fournie par l'outillage.

On poursuit l'engagement du tourillon dans les cannelures jusqu'au contact des filetages 23B et 10B respectivement.

On commence alors à visser l'écrou tout en exerçant une poussée additionnelle vers l'amont Pam fournie par l'outillage de façon à soulager le filetage. On visse l'écrou jusqu'à ce qu'à mise en butée en D du tourillon 10, figure 8, de manière à assurer une liaison satisfaisante par frettage entre le tourillon 10 et le manchon 18 de la roue conique 19, on a ménagé deux zones frettées, l'une F1 au niveau de la roue conique, l'autre F2 au niveau du roulement.

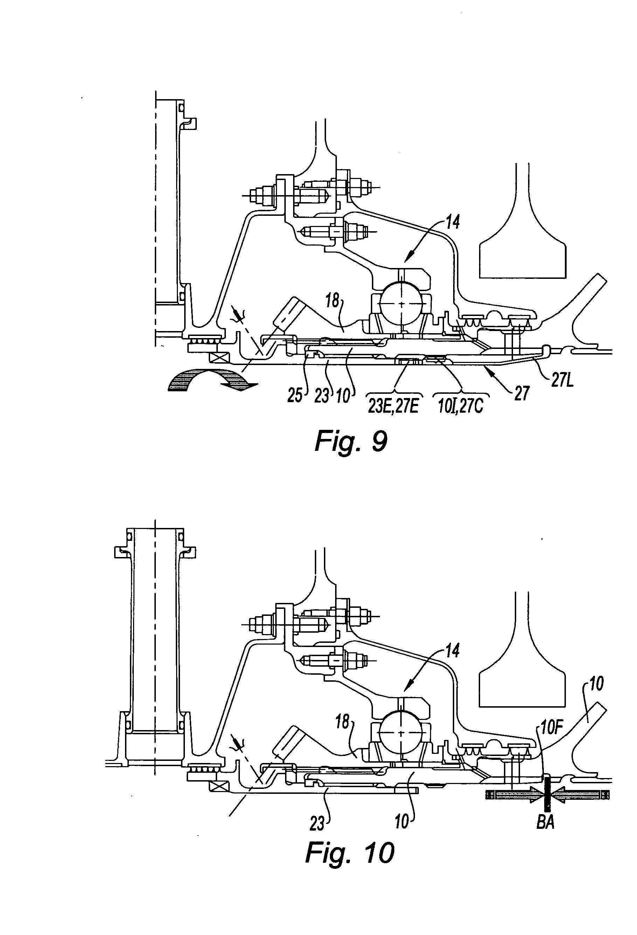

Après application d'un couple de serrage on met en place un frein d'écrou 27, figure 9. Le frein comprend une partie cylindrique avec des tenons 27E qui coopèrent avec des encoches 23 E en bout de l'écrou 23 et des cannelures 27C qui coopèrent avec des cannelures intentes 10I du tourillon. Le frein comprend des languettes 27L, à l'extrémité aval des pattes flexibles 27, qui sont introduites dans une gorge interne 10F du tourillon 10. Ce frein empêche ainsi toute rotation de l'écrou dans le sens du dévissage.

Le démontage comprend les opérations suivantes.

On retire le frein 27 et on bloque axialement BA le tourillon, figure 10. On utilise à cet effet la gorge 10F libérée par le frein d'écrou.

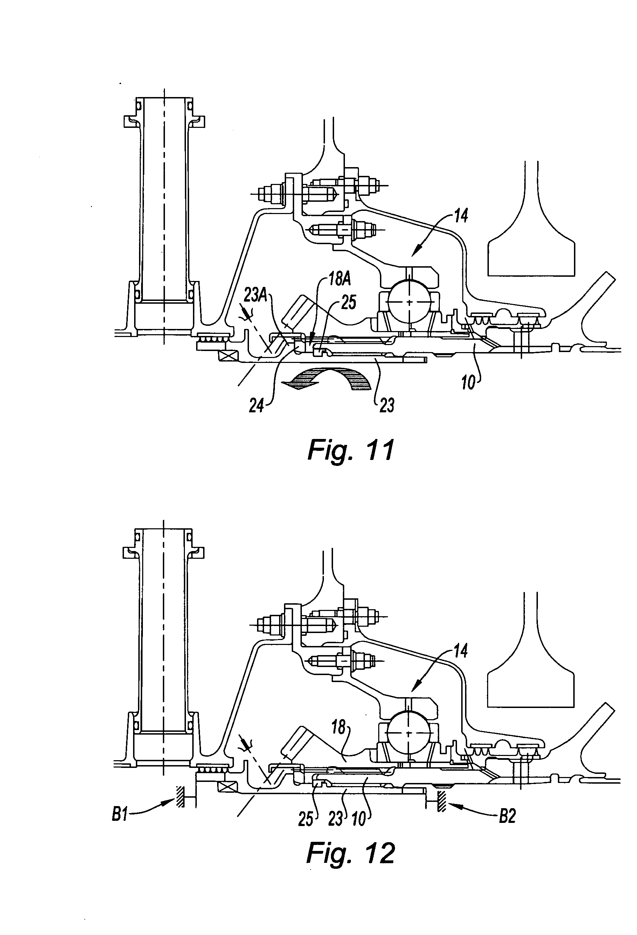

On dévisse l'écrou 23, il se déplace vers l'amont jusqu'à amener l'anneau d'arrêt 25 en contact sur la face aval de la bride radiale interne 18A de la la roue conique, figure 11.

On bride axialement l'écrou 23 des deux côtés, en B1 et B2 comme pour le montage, sur une partie fixe de l'outillage, Figure 12. Cette précaution empêche les efforts importants de défrettage de transiter par le palier 3.

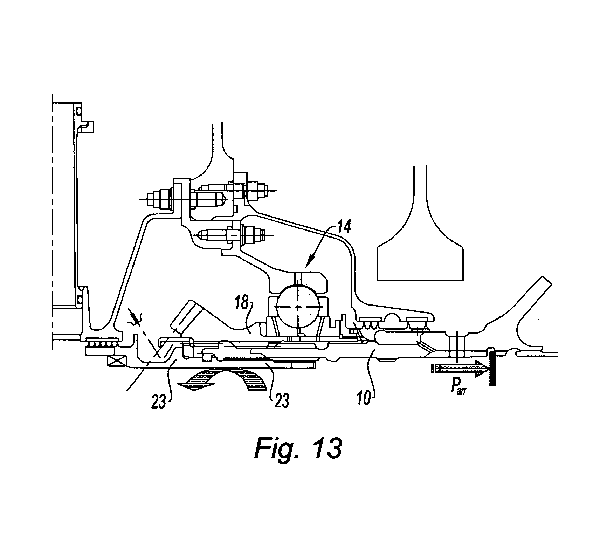

On dévisse l'écrou jusqu'au désengagement complet du tourillon, figure 13. Une poussée Parr additionnelle vers l'arrière, fournie par l'outillage, soulage le filetage. Il est à noter que les efforts de défrettage sont très importants puisqu'il n'y a pas de différentiel thermique entre le manchon de la roue conique et le tourillon 10. L'orientation conique des faces en contact, 18A1 et 25A évite que l'anneau s'ouvre et sorte de la gorge 23C.

L'effort nécessaire au défrettage de l'arbre, représentant plusieurs tonnes passe entièrement dans le filetage entre l'écrou de palier et le tourillon de l'arbre de compresseur si l'outillage utilisé ne le soulage pas d'une partie de l'effort. Par ailleurs, l'outillage doit fournir les butées axiales nécessaires pour ne pas faire transiter les efforts de montage / démontage dans le palier 3 ce qui pourrait endommager les pistes du roulement.

## Revendications

1. Moteur à turbine à gaz comprenant un arbre, un palier (14), un manchon (18) supporté par le palier, l'arbre étant engagé par un tourillon (10) d'extrémité à l'intérieur du manchon et fixé au manchon (18) au moyen d'un écrou cylindrique (23), **caractérisé par le fait que** l'écrou (23) est logé à l'intérieur du tourillon et est en butée axiale dans une première direction contre le manchon (18), lorsque le tourillon (10) est vissé sur l'écrou (23), et un anneau d'arrêt (25) fendu logé dans une gorge (23C) annulaire ménagée sur la face extérieure de l'écrou (23) forme butée axiale contre le manchon (18) dans la direction opposée à la première permettant l'extraction du tourillon (10) du manchon (18) par dévissage de l'écrou (23).

2. Moteur selon la revendication 1 dont l'épaisseur de l'anneau d'arrêt fendu (25) est inférieure à l'espace radial ménagé entre l'écrou (23) et le manchon (18).

3. Moteur selon la revendication 1 ou 2 dont la face (25A) de l'anneau d'arrêt fendu (25) du côté de la face (18A1) de butée axiale du manchon (18) et la face (18A1) de butée axiale du manchon (18) sont tronconiques, de manière à empêcher l'ouverture de l'anneau d'arrêt fendu (25) quand l'anneau est en butée contre la surface de butée axiale du manchon.

4. Moteur selon la revendication précédente dont l'anneau d'arrêt fendu (25) comprend du côté opposé au précédent une collerette (25B) en prolongement cylindrique format détrompeur et facilitant le démontage de l'anneau.

5. Moteur selon l'une des revendications précédentes dont le tourillon (10) comprend une portion d'extrémité (10A) cylindrique recouvrant l'anneau d'arrêt fendu (25), de façon à maintenir l'anneau d'arrêt dans la gorge (23C).

6. Moteur selon l'une des revendications précédentes dont le manchon (18) est partie d'une roue conique (19) de prise de puissance mécanique pour l'entraînement des équipements auxiliaires du moteur.

7. Moteur selon la revendication 6 dont le tourillon est en extrémité du compresseur à haute pression dans un moteur à double corps.

8. Moteur selon la revendication précédente dont le tourillon (10) du compresseur est fretté à l'intérieur du manchon (18) de la roue conique.

9. Procédé de montage du tourillon (10) d'extrémité amont du compresseur à haute pression dans ledit palier (14) du moteur de la revendication 8, comprenant les étapes suivantes : montage de l'écrou (23) dans le manchon (18) de la roue conique , insertion de l'anneau d'arrêt (25) dans la gorge (23C) de l'écrou, bridage axial de l'écrou (23), engagement du tourillon (10) de compresseur, vissage de l'écrou (23) à l'intérieur du tourillon (10) tout en exerçant une poussée axiale vers l'amont (Pam) sur le tourillon jusqu'à la mise en butée.

10. Procédé selon la revendication précédente comprenant l'étape de chauffage du manchon de la roue conique avant l'engagement du tourillon d'extrémité de l'arbre du compresseur.

11. Procédé selon l'une des revendications 9 et 10, comprenant le montage d'un frein d'écrou (27).

12. Procédé de démontage du tourillon (10) de compresseur dudit palier (14) du moteur de la revendication 8, après un montage selon la revendication 9, comprenant les étapes suivantes : blocage axial (BA) du tourillon (10) d'extrémité du compresseur, dévissage de l'écrou (23) jusqu'à ce que l'anneau d'arrêt (25) soit en butée contre la roue conique , bridage axial (B1, B2) de l'écrou, dévissage de l'écrou jusqu'au désengagement complet du tourillon d'extrémité du compresseur, tout en exerçant une poussée axiale vers l'arrière (Parr) sur le tourillon.

## Claims

1. A gas turbine engine comprising a shaft, a bearing (14), a coupling (18), supported by the bearing, the shaft being engaged by an end trunnion (10) inside the coupling and fixed to the coupling (18) by means of a cylindrical nut (23), wherein the nut (23) is housed inside the trunnion and is in axial abutment in a first direction against the coupling (18), when the trunnion (10) is screwed onto the nut (23), and a slotted stop ring (25) housed in an annular groove (23C) formed on the external face of the nut (23) forms an axial abutment against the coupling (18) in the direction opposing the first direction, allowing the removal of the trunnion (10) from the coupling (18) by unscrewing the nut (23).

2. The engine as claimed in claim 1, of which the thickness of the slotted stop ring (25) is less than the radial spacing formed between the nut (23) and the coupling (18).

3. The engine as claimed in claim 1 or 2, of which the face (25A) of the slotted stop ring (25) on the side of the face (18A1) of the axial abutment of the coupling (18) and the face (18A1) of the axial abutment of the coupling (18) are truncated, so as to prevent the opening of the slotted stop ring (25) when the ring is in abutment against the axial abutment surface of the coupling.

4. The engine as claimed in the preceding claim of which the slotted stop ring (25) comprises on the side opposing the preceding side a flange (25B) in the cylindrical extension forming a positioner and facilitating the removal of the ring.

5. The engine as claimed in one of the preceding claims, of which the trunnion (10) comprises a cylindrical end portion (10A) covering the slotted stop ring (25) so as to hold the stop ring in the groove (23C).

6. The engine as claimed in one of the preceding claims, of which the coupling (18) is part of a mechanical power take-off bevel gear (19) for driving the auxiliary equipment of the engine.

7. The engine as claimed in claim 6, of which the trunnion is at the end of the high pressure compressor in a double-bodied engine.

8. The engine as claimed in the preceding claim of which the trunnion (10) of the compressor is shrink-fitted inside the coupling (18) of the bevel gear.

9. A method for installing the upstream end trunnion (10) of the high pressure compressor in said bearing (14) of the engine of claim 8, comprising the following steps: installing the nut (23) in the coupling (18) of the bevel gear, inserting the stop ring (25) into the groove (23C) of the nut, axial flanging of the nut (23), engaging the trunnion (10) of the compressor, screwing the nut (23) inside the trunnion (10) whilst exerting an axial thrust upstream (Pam) onto the trunnion until brought into abutment.

10. The method as claimed in the preceding claim, comprising the step of heating the coupling of the bevel gear before the engagement of the end trunnion of the compressor shaft.

11. The method as claimed in one of claims 9 and 10, comprising the installation of a nut lock (27).

12. A method of removing the trunnion (10) of the compressor from said bearing (14) of the engine of claim 8, after installation as claimed in claim 9, comprising the following steps: axial locking (BA) of the end trunnion (10) of the compressor, unscrewing the nut (23), until the stop ring (25) is in abutment against the bevel gear, axial flanging (B1, B2) of the nut, unscrewing the nut until completely disengaging the end trunnion of the compressor, whilst exerting an axial thrust to the rear (Parr) on the trunnion.

## Patentansprüche

1. Gasturbinenantrieb, umfassend eine Welle, ein Lager (14), eine Muffe (18), die vom Lager getragen wird, wobei die Welle von einem Endzapfen (10) im Inneren der Muffe festgespannt wird und an der Muffe (18) mittels einer Ringmutter (23) befestigt ist, **dadurch gekennzeichnet, dass** die Mutter (23) im Inneren des Zapfens untergebracht ist und axial in eine erste Richtung gegen die Muffe (18) anschlägt, wenn der Zapfen (10) auf die Mutter (23) aufgeschraubt ist, und wobei ein Sicherungsring (25), der in einer ringförmigen Nut (23C) untergebracht ist, die auf der Außenfläche der Mutter (23) ausgebildet ist, den axialen Anschlag gegen die Muffe (18) in die der ersten Richtung entgegengesetzten Richtung bildet, wodurch der Ausbau des Zapfens (10) der Muffe (18) durch Abschrauben der Mutter (23) ermöglicht wird.

2. Antrieb nach Anspruch 1, von dem die Dicke des Sicherungsrings (25) geringer ist als der radiale Platz, der zwischen der Mutter (23) und der Muffe (18) ausgebildet ist.

3. Antrieb nach Anspruch 1 oder 2, von dem die Fläche (25A) des Sicherungsrings (25) auf Seite der axialen Anschlagsfläche (18A1) der Muffe (18) und die axiale Anschlagsfläche (18A1) der Muffe (18) kegelstumpfförmig sind, sodass die Öffnung des Sicherheitsrings (25) verhindert wird, wenn der Ring gegen die axiale Anschlagsfläche der Muffe anschlägt.

4. Antrieb nach dem vorhergehenden Anspruch, von dem der Sicherungsring (25) auf der der Vorhergehenden gegenüberliegenden Seite einen Kragen (25B) als zylindrische Verlängerung umfasst, der eine mechanische Codierung bildet und den Ausbau des Rings erleichtert.

5. Antrieb nach einem der vorhergehenden Ansprüche, von dem der Zapfen (10) einen zylindrischen Endabschnitt (10A) aufweist, der den Sicherungsring (25) abdeckt, um den Sicherungsring in der Nut (23C) zu halten.

6. Antrieb nach einem der vorhergehenden Ansprüche, von dem die Muffe (18) Teil eines Kegelrads (19) zur mechanischen Leistungsaufnahme für den Antrieb der Zusatzeinrichtungen des Antriebs ist.

7. Antrieb nach Anspruch 6, von dem der Zapfen am Ende des Hochdruckkompressors in einem Zwei-Wellen-Antrieb angeordnet ist.

8. Antrieb nach dem vorhergehenden Anspruch, von dem der Zapfen (10) des Kompressors im Inneren der Muffe (18) des Kegelrads aufgeschrumpft wird.

9. Verfahren zum Einbau des vorgelagerten Endzapfens (10) des Hochdruckkompressors in das Lager (14) des Antriebs nach Anspruch 8, umfassend folgende Schritte: Anbringen der Mutter (23) in der Muffe (18) des Kegelrads, Einsetzen des Sicherungsrings (25) in der Nut (23C) der Mutter, axiales Spannen der Mutter (23), Einfügen des Zapfens (10) des Kompressors, Festschrauben der Mutter (23) im Inneren des Zapfens (10) bei gleichzeitiger axialer Druckausübung nach vorne (Pam) auf den Zapfen, bis zum Anschlag.

10. Verfahren nach dem vorhergehenden Anspruch, umfassend den Schritt des Erhitzens der Muffe des Kegelrads vor dem Einfügen des Endzapfens der Kompressorwelle.

11. Verfahren nach einem der Ansprüche 9 und 10, umfassend den Einbau einer Mutternsicherung (27).

12. Verfahren zum Ausbau des Zapfens (10) des Kompressors aus dem Lager (14) des Antriebs nach Anspruch 8, nach dem Einbau nach Anspruch 9, umfassend folgende Schritte: axiales Blockieren (BA) des Endzapfens (10) des Kompressors, Abschrauben der Mutter (23) bis der Sicherungsring (25) gegen das Kegelrad anschlägt, axiales Spannen (B1, B2) der Mutter, Abschrauben der Mutter bis zum vollständigen Loslösen des Endzapfens des Kompressors bei gleichzeitiger axialer Druckausübung nach hinten (Parr) auf den Zapfen.
